# EUROPÄISCHE PATENTSCHRIFT

(11) **EP 4 324 713 B1**
(45) Veröffentlichungstag und Bekanntmachung des Hinweises auf die Patenterteilung: **18.02.2026**
(21) Anmeldenummer: 23182786.6
(22) Anmeldetag: 30.06.2023
(51) Int. Cl.: B60W 50/14, B60W 50/02, B60W 50/023, B60W 50/038

(54) **VERFAHREN ZUM BETREIBEN EINES FAHRZEUGES, COMPUTERPROGRAMMPRODUKT SOWIE FAHRZEUG**
METHOD FOR OPERATING A VEHICLE, COMPUTER PROGRAM PRODUCT AND VEHICLE
PROCÉDÉ DE FONCTIONNEMENT D'UN VÉHICULE, PRODUIT PROGRAMME INFORMATIQUE ET VÉHICULE

(30) Priorität: 19.08.2022 DE 102022208643
(43) Veröffentlichungstag der Anmeldung: 21.02.2024
(73) Patentinhaber: VOLKSWAGEN AG, 38440 Wolfsburg (DE)
(72) Erfinder: Bärecke, Frank, 38444 Wolfsburg (DE); Salzwedel, Leon, 38106 Braunschweig (DE)

(56) Entgegenhaltungen:
- DE-A1- 102007 002 748
- DE-A1- 102010 062 484
- DE-A1- 102011 121 260
- DE-A1- 102013 001 019
- DE-A1- 19 815 259

## Beschreibung

Die Erfindung betrifft ein Verfahren zum Betreiben eines Fahrzeuges mit zumindest einem Fahrparameter, ein Computerprogrammprodukt, sowie ein Fahrzeug.

Es ist aus dem Stand der Technik bekannt, für einen Teilausfall eines Fahrzeugsystems, z. B. in Form einer Lenkung oder einer Bremse, in einem Fahrzeug, eine oder mehrere Rückfallebenen vorzusehen. Beispielsweise ist es aus dem Dokument DE 11 2017 005 108 T5 bekannt, einen Notbetrieb für ein Fahrzeug vorzusehen, wenn ein Erstfehler erkannt wird. Dabei wird der Fahrer über eine Warnung angewiesen, das Fahrzeug an einen sicheren Ort zu Fahren und anzuhalten.

Bei redundanter Auslegung der sicherheitsrelevanten Fahrzeugsysteme sind die Auswirkungen auf die Fahrzeugsystemperformance des Fahrzeuges bei Eintritt eines Erstfehlers i. d. R. weniger kritisch, sodass ein solches Fahrzeug beim Eintritt eines Erstfehlers auch in Fahrsituationen mit hohen Anforderungen an die Fahrzeugperformance noch beherrschbar ist. Beim Eintritt eines auf den Erstfehler folgenden Zweitfehlers ist ein dauerhafter Betrieb nach dem Eintritt des Zweitfehlers häufig allerdings nicht vorgesehen, sodass dabei eine stärkere Einschränkung der Fahrzeugperformance möglich ist. Die im Fall des Zweitfehlers noch verbliebene Fahrzeugperformance ist aufgrund der Fahrzeugsystemkomplexität von Fahrzeugsystemen jedoch für den Fahrer i. d. R. schwer einschätzbar. Es ist daher wünschenswert, zu vermeiden, dass der Fahrer das Fahrzeug im Erstfehlerfall überschätzt und weiterhin mit einer hohen Fahrzeugsystemperformance betreibt, die über der abrufbaren Fahrzeugsystemperformance der dann nächsten Rückfallebene im Zweitfehlerfall liegt.

Die DE 10 2007 002 748 A1 offenbart ein Verfahren und eine Vorrichtung zum Betreiben eines Kraftfahrzeugs.

Die DE 10 2011 121 260 A1 offenbart ein Verfahren zum Unterstützen eines Fahrers eines Kraftfahrzeugs bei einem Aufmerksamkeitsverlust mit Hilfe eines Fehlerzählers.

Die DE 10 2013 001 019 A1 offenbart ein Verfahren zum Auslösen eines Warnsignals bei einem Fehlverhalten beim Betrieb eines Kraftfahrzeugs.

Die DE 10 2010 062 484 A1 offenbart ein Verfahren und Vorrichtung zum Einleiten eines Notlaufbetriebs eines Kraftfahrzeugs.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung einen Fahrer eines Fahrzeuges für einen sicheren Betrieb des Fahrzeuges bei einem Auftreten einer Störung zu unterstützen.

Die voranstehende Aufgabe wird gelöst durch ein Verfahren mit den Merkmalen des Anspruchs 1, ein Computerprogrammprodukt mit den Merkmalen des Anspruchs 8, sowie ein Fahrzeug mit den Merkmalen des Anspruchs 9. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Betreiben eines Fahrzeuges vorgesehen. Das Fahrzeug weist ein, insbesondere sicherheitsrelevantes, Fahrzeugsystem zum Ausführen einer Fahrfunktion in einem Normalbetrieb auf. Das Fahrzeugsystem ist ferner in Abhängigkeit von einer ersten Störung des Fahrzeugsystems in einem ersten Notbetrieb zur zumindest teilweisen oder vollständigen Aufrechterhaltung der Fahrfunktion betreibbar. Das Verfahren umfasst, insbesondere in Form von Verfahrensschritten:
- Erfassen eines Auftretens der ersten Störung des Fahrzeugsystems, insbesondere durch eine Steuereinheit des Fahrzeuges,
- Einleiten des ersten Notbetriebs in Abhängigkeit von der ersten Störung, insbesondere durch die Steuereinheit,
- Vorausbestimmen einer Einschränkung zumindest eines Fahrparameters des Fahrzeuges für eine auf die erste Störung folgenden, zweiten Störung des Fahrzeugsystems, d. h. insbesondere für den Fall eines Auftretens der zweiten Störung,
- Ausgeben zumindest eines Fahrerhinweises während des ersten Notbetriebs in Abhängigkeit von der Einschränkung, insbesondere durch die Steuereinheit.

Bei dem Fahrzeug handelt es sich vorzugsweise um ein Kraftfahrzeug, insbesondere in Form eines Elektrofahrzeuges, und/oder um ein Luftfahrzeug. Das Fahrzeugsystem kann vorzugsweise ein Lenksystem, insbesondere in Form eines Steer-by-Wire-Systems, und/oder ein Bremssystem, insbesondere in Form eines Brake-by-Wire- Systems, umfassen. Die Fahrfunktion kann z. B. eine Lenkung des Fahrzeuges und/oder ein Bremsen des Fahrzeuges umfassen.

Die erste und/oder zweite Störung können einen Software- und/oder Hardware-Fehler des Fahrzeugsystems oder einer das Fahrzeugsystem beeinflussenden Fahrzeugkomponente umfassen. Die erste Störung des Fahrzeugsystems kann beispielsweise einen zumindest teilweisen oder vollständigen Ausfall einer Systemkomponente des Fahrzeugsystems und/oder eines Kommunikationspfades zwischen der Steuereinheit und der Systemkomponente umfassen. Es ist jedoch ebenso denkbar, dass die Steuereinheit selbst einen Fehler aufweist, der zu der Störung des Fahrzeugsystems führt. Die Aufrechterhaltung der Fahrfunktion kann durch eine redundante Bereitstellung der Fahrfunktion durch das Fahrzeugsystem erfolgen. Zur zumindest teilweisen Aufrechterhaltung der Fahrfunktion kann beispielsweise die Systemkomponente und/oder der Kommunikationspfad redundant ausgeführt sein. Ferner kann vorgesehen sein, dass die Fahrfunktion im ersten Notbetrieb bereits eingeschränkt ist.

Beim Erfassen des Auftretens der ersten Störung kann insbesondere erkannt werden, ob die erste Störung vorliegt und/oder in welcher Form die erste Störung vorliegt. Das Einleiten des ersten Notbetriebs kann vorzugsweise automatisch aktiv oder passiv erfolgen, indem beispielsweise für die Aufrechterhaltung der Fahrfunktion auf die redundante Systemkomponente und/oder den redundanten Kommunikationspfad zurückgegriffen wird. Es kann vorgesehen sein, dass eine, insbesondere zu dem Fahrerhinweis separate, Warnmeldung über das Einleiten des ersten Notbetriebs für den Fahrer ausgegeben wird. Ferner ist es denkbar, dass die Fahrfunktion und/oder der Fahrparameter, insbesondere elektronisch, eingeschränkt wird, um eine durch den Fahrer abrufbare Fahrzeugleistung einzuschränken.

Das Vorausbestimmen der zweiten Störung kann vorzugsweise in Abhängigkeit von der ersten Störung und/oder durch die Steuereinheit ausgeführt werden. Die zweite Störung kann insbesondere auf die erste Störung folgen. Beispielsweise können die erste und zweite Störung bei Eintritt der zweiten Störung gleichzeitig vorliegen. Die Einschränkung des Fahrparameters kann aus der zweiten Störung resultieren und/oder aufgrund der zweiten Störung in einem zweiten Notbetrieb des Fahrzeugsystems automatisch vorgebbar sein.

Der Fahrparameter kann insbesondere einen Leistungsparameter des Fahrzeuges und/oder des Fahrzeugsystems, beispielsweise in Form einer Geschwindigkeit, einer Beschleunigung und/oder einer Bremsleistung, und/oder eine Fahreigenschaft des Fahrzeuges und/oder der Fahrfunktion, z. B. in Form eines Lenkwinkels, umfassen. Insbesondere kann der Fahrparameter der Fahrfunktion des Fahrzeugsystems oder einer weiteren Fahrfunktion des Fahrzeuges zugeordnet sein. Unter der Einschränkung kann vorzugsweise eine zumindest teilweise Reduktion und/oder eine reduzierte oder nicht vorhandene Verfügbarkeit des Fahrparameters im Vergleich zum Normalbetrieb verstanden werden. Im Normalbetrieb, und vorzugsweise im ersten Notbetrieb, des Fahrzeugsystems kann der Fahrparameter bestimmungsgemäß, vorzugsweise ohne Einschränkung, einstellbar sein. Die Einschränkung des Fahrparameters bei der zweiten Störung kann einen Grenzwert des Fahrparameters umfassen. Insbesondere kann die zweite Störung erfassbar und das Fahrzeugsystem in Abhängigkeit von der zweiten Störung in einem zweiten Notbetrieb mit dem eingeschränkten Fahrparameter betreibbar sein. Beispielsweise kann im zweiten Notbetrieb ein Anhalten des Fahrzeuges elektronisch erzwungen werden. Beim Vorausbestimmen der Einschränkung kann vorteilhafterweise eine im zweiten Notbetrieb erzielbare, insbesondere maximale, Leistung des Fahrzeuges, insbesondere in Bezug auf den Fahrparameter, vorausbestimmt werden, um den Grenzwert des Fahrparameters zu ermitteln. Ferner kann dabei ein Sicherheitsfaktor berücksichtigt werden.

Der Fahrerhinweis kann eine Information zu der Einschränkung umfassen. Beispielsweise kann der Fahrerhinweis in Form eines Signals ausgegeben werden, welches die Information transportiert. So ist es im Rahmen der Erfindung erkannt worden, dass einige Fahrer die Bedeutung der ersten Störung nicht vollständig erkennen und ihren Fahrstil nicht situationsadäquat anpassen. Dadurch, dass bei dem Verfahren der Fahrerhinweis ausgegeben wird, kann der Fahrer über die Einschränkung, d. h. beispielsweise über eine aus der Einschränkung resultierende Fahrzeugperformance, die bei einem Auftreten der zweiten Störung erwartet wird, informiert werden. Vorzugsweise kann dem Fahrer die Einschränkung durch den Fahrerhinweis qualitativ und/oder quantitativ übermittelt werden. Insbesondere wird der Fahrer somit auf eine prognostizierte Reduktion seiner Kontrollmöglichkeiten des Fahrzeuges hingewiesen, sodass er seine Fahrweise situationsadäquat anpassen kann.

Ferner ist bei einem erfindungsgemäßen Verfahren vorgesehen, dass das Verfahren umfasst, in Form von Verfahrensschritten:
- Erfassen eines Fahrverhaltens des Fahrers während des ersten Notbetriebs, insbesondere durch die Steuereinheit und/oder eine Sensorik des Fahrzeuges,
- Bewerten des Fahrverhaltens in Abhängigkeit von der Einschränkung, insbesondere durch die Steuereinheit,
wobei das Ausgeben des Fahrerhinweises in Abhängigkeit von der Bewertung des Fahrverhaltens ausgeführt wird. Das Fahrverhalten des Fahrers kann insbesondere anhand eines Steuer- und/oder Bedienverhaltens des Fahrzeuges durch den Fahrer erkannt werden. Insbesondere kann der Fahrparameter und/oder ein Verlauf des Fahrparameters beim Erfassen des Fahrverhaltens aufgezeichnet werden. Ferner kann zum Bewerten des Fahrverhaltens vorteilhafterweise der Fahrparameter, insbesondere für die aktuelle Fahrsituation des Fahrzeuges und/oder über einen vorbestimmten Zeitraum, ausgewertet werden. Dazu können anhand der vorausbestimmten Einschränkung des Fahrparameters Referenzanforderungen an das Fahrverhalten ermittelt werden, anhand derer das erfasste Fahrverhalten als kritisch und/oder unkritisch klassifiziert wird. Ferner kann das Erfassen und Bewerten des Fahrverhaltens kontinuierlich erfolgen. Das Ausgeben des Fahrerhinweises kann vorzugsweise zu einem Zeitpunkt erfolgen, in welchem der Fahrparameter die vorbestimmte Einschränkung für die zweite Störung im ersten Notbetrieb überschreitet. Dadurch kann der Fahrer darauf hingewiesen werden, dass das aktuelle Fahrverhalten die Leistungsfähigkeit des Fahrzeuges für den Fall der zweiten Störung übersteigt.

Weiterhin ist es bei einem erfindungsgemäßen Verfahren denkbar, dass das Erfassen des Fahrverhaltens, insbesondere kontinuierlich, über einen Karenzzeitraum erfolgt, insbesondere bevor das Bewerten des Fahrverhaltens und/oder das Ausgeben des Fahrerhinweises ausgeführt wird. Der Karenzzeitraum kann festgelegt sein oder dynamisch während des Verfahrens, insbesondere während des Erfassens des Fahrverhaltens, definiert werden. Es kann vorgesehen sein, dass das Ausgeben des Fahrerhinweises nach dem Karenzzeitraum unmittelbar vollständig erfolgt oder das Ausgeben des Fahrerhinweises zu Beginn einen progressiven Ausgabeverlauf, bei welchem die Intensität des Fahrerhinweises über eine Zeit ansteigt, hat. Durch den progressiven Verlauf kann verhindert werden, dass der Fahrer durch den Fahrerhinweis plötzlich überrascht wird. Durch das Erfassen über den Karenzzeitraum kann sichergestellt werden, dass die Datenbasis für die Bewertung groß genug ist und/oder dass das Fahrverhalten durch den Fahrer intendiert ist. Beispielsweise kann der Zeitraum größer oder gleich 5 Minuten sein. Somit kann z. B. ausgeschlossen werden, dass der Fahrer einen ggf. beim Erfassen und Bewerten des Fahrverhaltens erkannten temporär hohen Leistungsabruf nicht nur aufgrund einer bestimmten Fahrsituation tätigt.

Im Rahmen der Erfindung ist es weiterhin denkbar, dass das Ausgeben des Fahrerhinweises haptisch erfolgt, insbesondere indem eine Ansteuerung der Fahrzeugkomponente zum Ausführen einer Vibration ausgeführt wird. Die haptische Ausgabe des Fahrerhinweises kann beispielsweise über die Lenkung des Fahrzeuges, insbesondere durch ein Feedback im Lenkrad, eine Vibration im Lenkrad, eine veränderte Gegenkraft und/oder eine verzögerte oder nichtlineare Umsetzung der Lenkanforderung, erfolgen. Ferner ist es denkbar, dass eine haptische Ausgabe des Fahrerhinweises, beispielsweise über einen Antriebsstrang und/oder eine Bremsanlage des Fahrzeuges, insbesondere durch pulsierende Raddrücke und/oder eine pulsierende Antriebssteuerung zum Induzieren von Vibrationen in das Fahrzeug bei einer Bremsbetätigung der Bremsanlage und/oder einen veränderten Pedalweg eines Pedals zum Ansteuern des Antriebsstrangs oder der Bremsanlage, erfolgen kann. Durch die haptische Ausgabe kann der Fahrer den Fahrerhinweis unabhängig von einer Geräuschkulisse und/oder einer Informationsfülle im Sichtfeld erhalten. Dadurch kann die Aufnahme des Fahrerhinweises durch den Fahrer vereinfacht sein.

Vorzugsweise kann bei einem erfindungsgemäßen Verfahren vorgesehen sein, dass das Ausgeben des Fahrerhinweises in Form einer Ausgabe einer optischen und/oder akustischen Information erfolgt. Dabei kann die optische und/oder akustische Information vorzugsweise eine Warnmeldung in Abhängigkeit von der Einschränkung des Fahrparameters umfassen. Die optische Information kann über eine Anzeigevorrichtung des Fahrzeuges, beispielsweise über einen Bildschirm und/oder ein Head-Up-Display ausgegeben werden. Durch die optische Ausgabe kann der Fahrerhinweis beispielsweise zusätzlich zu einem Warnhinweis zum Einleiten des ersten Notbetriebes erfolgen. Ferner kann der Fahrerhinweis den Warnhinweis beim Ausgeben des Fahrerhinweises ersetzen, sodass der Fahrer die erhöhte Relevanz seines Fahrverhaltens in einfacher Art und Weise erkennen kann. Die akustische Information kann beispielsweise über einen Lautsprecher des Fahrzeuges und/oder durch technische Vibrationen, die z. B. durch eine Ansteuerung von Ventilschaltungen und/oder ein elektromotorisches Brummen hervorgerufen werden, ausgegeben werden. Bei der akustischen Ausgabe des Fahrerhinweises kann beispielsweise ein Entertainment-Medium, wie z. B. eine Musik oder eine Radiosendung, im Fahrzeug unterbrochen werden. Die akustische und/oder optische Information kann für den Fahrer ein gewohntes Medium darstellen, um die Warnmeldung zu erhalten, wodurch eine Irritation des Fahrers vermieden werden kann. Ferner kann die akustische und/oder optische Information eine, insbesondere quantitative, Information in Form einer lesbaren und/oder hörbaren Sprachinformation über die Einschränkung umfassen. Dadurch kann insbesondere ein erfahrener Fahrer die Einschränkung besser einschätzen.

Ferner kann bei einem erfindungsgemäßen Verfahren vorteilhafterweise vorgesehen sein, dass mehrere Fahrerhinweise, insbesondere mit unterschiedlichen Ausgabearten und/oder in Abhängigkeit von dem Bewerten des Fahrverhaltens, nacheinander und/oder mit einem zeitlichen Abstand zueinander ausgegeben werden. Um beispielsweise einen progressiven Verlauf beim Ausgeben zu realisieren, können die Fahrerhinweise nacheinander ausgegeben werden. Dabei können die Fahrerhinweise beispielsweise eine vordefinierte Reihenfolge aufweisen. Insbesondere kann vorgesehen sein, dass zunächst eine optische und/oder akustische Information ausgegeben wird und anschließend eine haptische Ausgabe eines Fahrerhinweises erfolgt. Insbesondere kann die haptische Ausgabe dabei nur dann erfolgen, wenn das Fahrverhalten des Fahrers nach der optischen und/oder akustischen Information weiterhin als kritisch bewertet wird. Dadurch kann der Fahrer deutlicher auf die vorausbestimmte Einschränkung hingewiesen werden.

Weiterhin ist es bei einem erfindungsgemäßen Verfahren denkbar, dass eine Fahrzeugumgebung des Fahrzeuges im ersten Notbetrieb erfasst wird, wobei die Fahrzeugumgebung beim Vorausbestimmen der Einschränkung und/oder beim Bewerten des Fahrverhaltens berücksichtigt wird. Das Erfassen der Fahrzeugumgebung kann durch eine, insbesondere vorausschauende, Sensorik des Fahrzeuges ausgeführt werden. Beim Erfassen der Fahrzeugumgebung können beispielsweise vorliegende und/oder prognostizierte Wetterbedingungen, Streckenverhältnisse und/oder Navigationsdaten des Fahrzeuges erkannt werden. Zusätzlich oder alternativ kann bei dem Verfahren vorgesehen sein, dass ein Fahrzeugzustand des Fahrzeuges im ersten Notbetrieb erfasst wird und der Fahrzeugzustand beim Vorausbestimmen der Einschränkung und/oder beim Bewerten des Fahrverhaltens berücksichtigt wird. Der Fahrzeugzustand kann beispielsweise einen Zustand von Fahrzeugreifen und/oder einen Verschleißzustand des Fahrzeugsystems umfassen. Durch die Berücksichtigung der Fahrzeugumgebung und/oder des Fahrzeugzustandes kann die Genauigkeit beim Vorausbestimmen der Einschränkung und/oder beim Bewerten des Fahrverhaltens, insbesondere in Bezug auf die aktuelle Fahrsituation, verbessert werden.

Es ist ferner bei einem erfindungsgemäßen Verfahren denkbar, dass zusätzlich zum Ausgeben des Fahrerhinweises eine Fahrzeugreaktion zur Beschränkung des Fahrverhaltens in Abhängigkeit von der vorausbestimmten Einschränkung des Fahrerhinweises, dem Fahrzeugzustand, der Fahrzeugumgebung und/oder dem Bewerten des Fahrverhaltens ausgeführt wird. Bei der Fahrzeugreaktion kann beispielsweise eine Geschwindigkeit und/oder eine Beschleunigung des Fahrzeuges, insbesondere elektronisch, auf einen reduzierten Maximalwert beschränkt werden. Dabei kann das Fahrzeugsystem oder ein weiteres Fahrzeugsystem zum Ausführen der Fahrzeugreaktion angesteuert werden. Insbesondere kann das Fahrverhalten dadurch beschränkt werden, dass die Fahrfunktion und/oder eine weitere Fahrfunktion des Fahrzeuges nur noch beschränkt ermöglicht wird. Durch die Beschränkung des Fahrverhaltens kann der Fahrer aktiv daran gehindert werden, das Fahrzeug im ersten Notbetrieb über einen längeren Zeitraum und/oder bei widrigen Fahrbedingungen mit einem hohen Leistungsabruf zu betreiben. Durch die Beschränkung des Fahrverhaltens in Abhängigkeit von der Bewertung des Fahrverhaltens kann das Fahrverhalten des Fahrers insbesondere sanktioniert werden. Durch die Beschränkung des Fahrverhaltens in Abhängigkeit von der vorausbestimmten Einschränkung des Fahrerhinweises, dem Fahrzeugzustand und/oder der Fahrzeugumgebung kann die Fahrzeugreaktion dynamisch und/oder situationsadäquat ausgeführt werden.

Gemäß einem weiteren Aspekt der Erfindung ist ein Computerprogrammprodukt vorgesehen. Das Computerprogrammprodukt umfasst Befehle, die bei einer Ausführung durch eine Steuereinheit die Steuereinheit veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher oder einem eingebauten Speicher/Prozessor, abgespeichert sein. Ferner kann das Computerprogrammprodukt in einem Netzwerk, wie beispielsweise dem Internet, bereitstellbar oder bereitgestellt sein, von dem es bei Bedarf von einem Nutzer heruntergeladen oder online ausgeführt werden kann. Das Computerprogrammprodukt kann sowohl mittels einer Software als auch mittels einer oder mehrerer spezieller elektronischer Schaltungen, d. h. in Hardware oder in beliebig hybrider Form, d. h. mittels Software-Komponenten und Hardware-Komponenten, realisiert sein.

Gemäß einem weiteren Aspekt der Erfindung ist ein Fahrzeug vorgesehen. Das Fahrzeug weist ein, vorzugsweise sicherheitsrelevantes, Fahrzeugsystem zum Ausführen einer Fahrfunktion in einem Normalbetrieb auf. Das Fahrzeugsystem ist in Abhängigkeit von einer ersten Störung des Fahrzeugsystems in einem ersten Notbetrieb zur zumindest teilweisen Aufrechterhaltung der Fahrfunktion betreibbar. Ferner weist das Fahrzeug, vorzugsweise das Fahrzeugsystem, eine Steuereinheit zum Ausführen eines erfindungsgemäßen Verfahrens auf.

Somit bringt ein erfindungsgemäßes Fahrzeug die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Die Steuereinheit kann einen Prozessor und/oder einen Mikroprozessor umfassen. Ferner kann die Steuereinheit zumindest teilweise oder vollständig in ein zentrales Steuergerät des Fahrzeuges integriert sein. Es ist jedoch ebenfalls denkbar, dass die Steuereinheit zumindest teilweise oder vollständig in ein oder mehrere dezentrale Steuergeräte des Fahrzeuges und/oder des Fahrzeugsystems integriert ist. Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen schematisch:
- Figur 1: ein erfindungsgemäßes Fahrzeug,
- Figur 2: ein Ablauf eines erfindungsgemäßen Verfahrens zum Betreiben des Fahrzeuges,
- Figur 3: ein Verlauf eines Fahrparameter des Fahrzeuges über eine Zeit.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

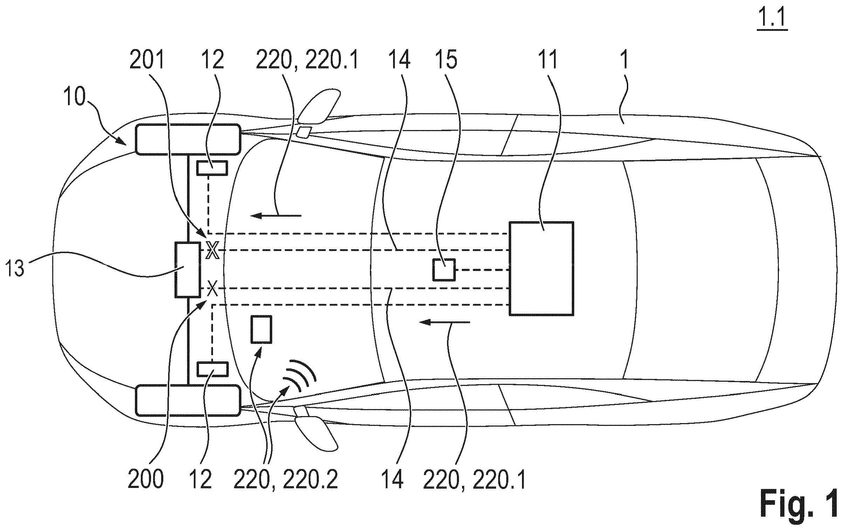

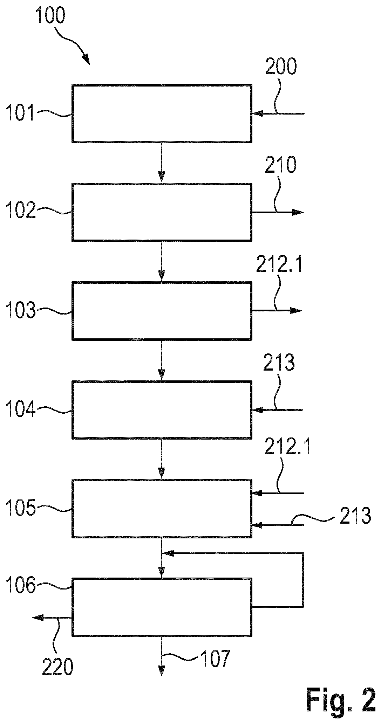

Figur 1 zeigt ein erfindungsgemäßes Fahrzeug 1 mit einem, insbesondere sicherheitsrelevanten, Fahrzeugsystem 10 zum Ausführen einer Fahrfunktion in einem Normalbetrieb des Fahrzeugsystems 10. Bei dem Fahrzeugsystem 10 handelt es sich im vorliegenden Ausführungsbeispiel um ein Lenksystem des Fahrzeuges 1, insbesondere in Form eines Steer-by-Wire-Systems. Es ist jedoch ebenso denkbar, dass es sich bei dem Fahrzeugsystem 10 um ein Bremssystem, z. B. in Form eines Brake-by-Wire-Systems, oder ein anderes Bordsystem des Fahrzeuges 1 handelt. Ferner weist das Fahrzeug 1 eine Steuereinheit 11 zum Ausführen eines erfindungsgemäßen Verfahrens 100 zum Betreiben des Fahrzeuges 1 auf. Dazu kann beispielsweise ein Computerprogrammprodukt vorgesehen sein, welches Befehle umfasst, die bei einer Ausführung durch eine Steuereinheit 11 die Steuereinheit 11 veranlassen, das Verfahren 100 auszuführen. Ein Ablauf des Verfahrens 100 ist schematisch in Figur 2 gezeigt.

Das Fahrzeugsystem 10 ist dabei in Abhängigkeit von einer ersten Störung 200 des Fahrzeugsystems 10 in einem ersten Notbetrieb 210 zur zumindest teilweisen Aufrechterhaltung der Fahrfunktion betreibbar. Wie dargestellt, kann die erste Störung 200 z. B. einen Ausfall einer Kommunikationsleitung 14 zwischen der Steuereinheit 11 und einer Lenkeinheit 13 umfassen. Der erste Notbetrieb 210 bildet somit insbesondere eine erste Rückfallebene für einen Erstfehlerfall. Vorzugsweise ist das Fahrzeugsystem 10 ferner in Abhängigkeit von einer auf die erste Störung 200 folgenden, zweiten Störung 201 des Fahrzeugsystems 10 in einem zweiten Notbetrieb zur zumindest teilweisen Aufrechterhaltung des Betriebs des Fahrzeuges 1 betreibbar. Im zweiten Notbetrieb kann die Fahrfunktion des Fahrzeugsystems 10 z. B. beschränkt verfügbar oder nicht verfügbar sein. Beispielsweise kann die zweite Störung 201 einen Ausfall einer weiteren, redundanten Kommunikationsleitung 14 zwischen der Steuereinheit 11 und einer Lenkeinheit 13 umfassen. Der zweite Notbetrieb bildet somit insbesondere eine zweite Rückfallebene für einen Zweitfehlerfall.

Bei dem Verfahren 100 erfolgt ein Erfassen 101 eines Auftretens der ersten Störung 200 des Fahrzeugsystems 10. Dabei kann der Ausfall der Kommunikationsleitung 14 der ersten Störung 200 beispielsweise durch die Steuereinheit 11 detektiert werden. In Abhängigkeit von der ersten Störung 200 erfolgt daraufhin ein Einleiten 102 des ersten Notbetriebs 210. Dabei kann die Steuereinheit 11 beispielsweise aktiv auf den ersten Notbetrieb 210 umschalten oder passiv die Kommunikation über die übrig gebliebene Kommunikationsleitung 14 fortsetzen.

Um die möglichen Auswirkungen der zweiten Störung 201 auf das Fahrzeug 1 abschätzen zu können, erfolgt ferner ein Vorausbestimmen 103 einer Einschränkung 212.1 zumindest eines Fahrparameters 212 des Fahrzeuges 1 für die zweite Störung 201 des Fahrzeugsystems 10. Das Vorausbestimmen 103 kann beispielsweise nach dem Einleiten 102 des ersten Notbetriebes 210, insbesondere in Abhängigkeit von der ersten Störung 200, erfolgen. Dazu kann beispielsweise eine Störungsart der ersten Störung 200 ermittelt werden, um die Einschränkung 212.1 des Fahrparameters 212 vorauszubestimmen. Beispielsweise kann der Fahrparameter 212 einen Lenkwinkel und/oder eine Geschwindigkeit des Fahrzeugsystems 10 umfassen.

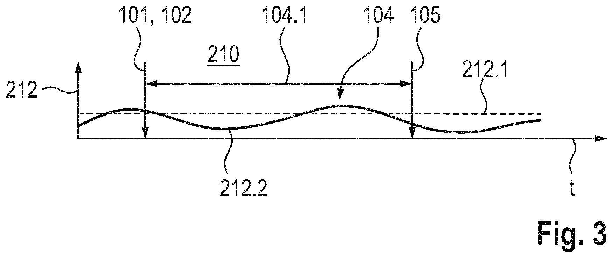

Weiterhin erfolgt ein Erfassen 104 eines Fahrverhaltens 213 des Fahrers während des ersten Notbetriebs 210. Wie in Figur 3 dargestellt, kann dazu ein Verlauf 212.2 des Fahrparameters 212 über eine Zeit t sensorisch erfasst werden. Vorzugsweise erfolgt das Erfassen 104 des Fahrverhaltens 213 über einen Karenzzeitraum 104.1, um eine Datenbasis zu schaffen und/oder das Fahrverhalten 213 als temporär oder dauerhaft klassifizieren zu können. Nach dem Karenzzeitraum 104.1 wird ein Bewerten 105 des Fahrverhaltens 213 in Abhängigkeit von der Einschränkung 212.1 ausgeführt. Beim Bewerten 105 des Fahrverhaltens 213 kann das Fahrverhalten 213 beispielsweise als kritisch eingestuft werden, wenn der Fahrer während des ersten Notbetriebs 210 die vorausbestimmte Einschränkung 212.1 des Fahrparameters 212, vorzugsweise häufig und/oder dauerhaft, überschreitet. Zusätzlich oder alternativ kann eine Fahrzeugumgebung 1.1 des Fahrzeuges 1 im ersten Notbetrieb 210 durch eine Sensorik 15, z. B. in Form einer Frontkamera, und/oder durch die Steuereinheit 11 erfasst werden.

In Abhängigkeit von der vorausbestimmten Einschränkung 212.1 des Fahrparameters 212 erfolgt ferner ein Ausgeben 106 zumindest eines Fahrerhinweises 220 während des ersten Notbetriebs 210. Dabei werden vorzugsweise das Bewerten 105 des Fahrverhaltens 213 und die Fahrzeugumgebung 1.1 berücksichtigt. Beispielsweise kann das Ausgeben 106 des Fahrerhinweises 220 nur dann erfolgen, wenn das Fahrverhalten 213 in der erfassten Fahrzeugumgebung 1.1 als kritisch bewertet wird. Das Ausgeben 106 des Fahrerhinweises 220 kann beispielsweise, wie in Figur 1 gezeigt, in Form einer Ausgabe 106 einer optischen und/oder akustischen Information 220.2 für den Fahrer erfolgen. Ferner ist es denkbar, dass das Ausgeben 106 des Fahrerhinweises 220 haptisch erfolgt, indem eine Ansteuerung 220.1 der Fahrzeugkomponente 12, wie z. B. einer Radbremse, zum Ausführen einer Vibration zum Induzieren in das Fahrzeug 1 ausgeführt wird. Vorzugsweise werden mehrere Fahrerhinweise 220 in Abhängigkeit von dem Bewerten 105 des Fahrverhaltens 213 mit unterschiedlichen Ausgabearten nacheinander und/oder mit einem zeitlichen Abstand zueinander ausgegeben.

Zusätzlich zum Ausgeben 106 des Fahrerhinweises 220 wird insbesondere eine Fahrzeugreaktion 107 zur Beschränkung des Fahrverhaltens 213 in Abhängigkeit von der vorausbestimmten Einschränkung 212.1 des Fahrerhinweises 220 von der Fahrzeugumgebung 1.1 und/oder dem Bewerten 105 des Fahrverhaltens 213 ausgeführt. Dadurch kann das Fahrverhalten 213 des Fahrers elektronisch beschränkt, insbesondere sanktioniert, werden, um die Sicherheit des Fahrzeuges 1 im ersten Notbetrieb 210 zu verbessern und das Fahrzeug 1 in Vorbereitung auf einen möglichen Eintritt des zweiten Notbetriebs in einen sicheren Fahrmodus zu bringen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 1.1: Fahrzeugumgebung
- 10: Fahrzeugsystem
- 11: Steuereinheit
- 12: Fahrzeugkomponente
- 13: Lenkeinheit
- 14: Kommunikationsleitung
- 15: Sensorik

- 100: Verfahren
- 101: Erfassen von Auftreten von 200
- 102: Einleiten von 210
- 103: Vorausbestimmen von 212.1
- 104: Erfassen von 213
- 104.1: Karenzzeitraum
- 105: Bewerten von 213
- 106: Ausgeben von 220
- 107: Fahrzeugreaktion

- 200: erste Störung
- 201: zweite Störung

- 210: erster Notbetrieb
- 212: Fahrparameter
- 212.1: Einschränkung
- 212.2: Verlauf von 212
- 213: Fahrverhalten

- 220: Fahrerhinweis
- 220.1: Ansteuerung
- 220.2: Information

- t: Zeit

## Patentansprüche

1. Verfahren (100) zum Betreiben eines Fahrzeuges (1), das ein Fahrzeugsystem (10) zum Ausführen einer Fahrfunktion in einem Normalbetrieb aufweist, welches in Abhängigkeit von einer ersten Störung (200) des Fahrzeugsystems (10) in einem ersten Notbetrieb (210) zur zumindest teilweisen Aufrechterhaltung der Fahrfunktion betreibbar ist,
**dadurch gekennzeichnet, dass**
das Verfahren (100) umfasst:
- Erfassen (101) eines Auftretens der ersten Störung (200) des Fahrzeugsystems (10),
- Einleiten (102) des ersten Notbetriebs (210) in Abhängigkeit von der ersten Störung (200),
- Vorausbestimmen (103) einer Einschränkung (212.1) zumindest eines Fahrparameters (212) des Fahrzeuges (1) für eine auf die erste Störung (200) folgenden, zweiten Störung (201) des Fahrzeugsystems (10),
- Ausgeben (106) zumindest eines Fahrerhinweises (220) während des ersten Notbetriebs (210) in Abhängigkeit von der Einschränkung (212.1),
- Erfassen (104) eines Fahrverhaltens (213) des Fahrers während des ersten Notbetriebs (210),
- Bewerten (105) des Fahrverhaltens (213) in Abhängigkeit von der Einschränkung (212.1),
wobei das Ausgeben (106) des Fahrerhinweises (220) in Abhängigkeit von der Bewertung (105) des Fahrverhaltens (213) ausgeführt wird.

2. Verfahren (100) nach Anspruch 1,
**dadurch gekennzeichnet,**
**dass** das Erfassen (104) des Fahrverhaltens (213) über einen Karenzzeitraum (104.1) erfolgt, bevor das Bewerten (105) des Fahrverhaltens (213) und das Ausgeben (106) des Fahrerhinweises (220) ausgeführt wird.

3. Verfahren (100) nach einem der vorhergehenden Ansprüche,
**dadurch gekennzeichnet,**
**dass** das Ausgeben (106) des Fahrerhinweises (220) haptisch erfolgt, indem eine Ansteuerung (220.1) der Fahrzeugkomponente (12) zum Ausführen einer Vibration ausgeführt wird.

4. Verfahren (100) nach einem der vorhergehenden Ansprüche,
**dadurch gekennzeichnet,**
**dass** das Ausgeben (106) des Fahrerhinweises (220) in Form einer Ausgabe (106) einer optischen und/oder akustischen Information (220.2) erfolgt.

5. Verfahren (100) nach einem der vorhergehenden Ansprüche,
**dadurch gekennzeichnet,**
**dass** mehrere Fahrerhinweise (220) in Abhängigkeit von dem Bewerten (105) des Fahrverhaltens (213) mit unterschiedlichen Ausgabearten nacheinander und/oder mit einem zeitlichen Abstand zueinander ausgegeben werden.

6. Verfahren (100) nach einem der vorhergehenden Ansprüche,
**dadurch gekennzeichnet,**
**dass** eine Fahrzeugumgebung (1.1) des Fahrzeuges (1) im ersten Notbetrieb (210) erfasst wird, wobei die Fahrzeugumgebung (1.1) beim Vorausbestimmen (103) der Einschränkung (212.1) und/oder beim Bewerten (105) des Fahrverhaltens (213) berücksichtigt wird.

7. Verfahren (100) nach einem der vorhergehenden Ansprüche,
**dadurch gekennzeichnet,**
**dass** zusätzlich zum Ausgeben (106) des Fahrerhinweises (220) eine Fahrzeugreaktion (107) zur Beschränkung des Fahrverhaltens (213) in Abhängigkeit von der vorausbestimmten Einschränkung (212.1) des Fahrerhinweises (220), der Fahrzeugumgebung (1.1) und/oder dem Bewerten (105) des Fahrverhaltens (213) ausgeführt wird.

8. Computerprogrammprodukt, umfassend Befehle, die bei einer Ausführung durch eine Steuereinheit (11) die Steuereinheit (11) veranlassen, ein Verfahren (100) nach einem der vorhergehenden Ansprüche auszuführen.

9. Fahrzeug (1) aufweisend
ein Fahrzeugsystem (10) zum Ausführen einer Fahrfunktion in einem Normalbetrieb, welches in Abhängigkeit von einer ersten Störung (200) des Fahrzeugsystems (10) in einem ersten Notbetrieb (210) zur zumindest teilweisen Aufrechterhaltung der Fahrfunktion betreibbar ist, und
eine Steuereinheit (11) zum Ausführen eines Verfahrens (100) nach einem der Ansprüche 1 bis 7.

## Claims

1. Method (100) for operating a vehicle (1) having a vehicle system (10) for performing a driving function in a normal mode, which vehicle system can, on the basis of a first fault (200) of the vehicle system (10), be operated in a first emergency mode (210) for at least partially maintaining the driving function,
**characterized in that**
the method (100) comprises:
- detecting (101) an occurrence of the first fault (200) of the vehicle system (10),
- initiating (102) the first emergency mode (210) on the basis of the first fault (200),
- predetermining (103) a restriction (212.1) of at least one driving parameter (212) of the vehicle (1) for a second fault (201) of the vehicle system (10) that occurs after the first fault (200),
- outputting (106) at least one driver notification (220) during the first emergency mode (210) on the basis of the restriction (212.1),
- detecting (104) driving behavior (213) of the driver during the first emergency mode (210),
- evaluating (105) the driving behavior (213) on the basis of the restriction (212.1),
the driver notification (220) being output (106) on the basis of the evaluation (105) of the driving behavior (213).

2. Method (100) according to claim 1,
**characterized in that**
the driving behavior (213) is detected (104) over a waiting period (104.1) before the driving behavior (213) is evaluated (105) and the driver notification (220) is output (106).

3. Method (100) according to either of the preceding claims,
**characterized in that**
the driver notification (220) is output (106) haptically by the vehicle component (12) being actuated (220.1) to perform a vibration.

4. Method (100) according to any of the preceding claims,
**characterized in that**
the driver notification (220) is output (106) in the form of an output (106) of optical and/or acoustic information (220.2).

5. Method (100) according to any of the preceding claims,
**characterized in that**
a plurality of driver notifications (220) are output, consecutively and/or with a time interval between them, with different output types on the basis of the evaluation (105) of the driving behavior (213).

6. Method (100) according to any of the preceding claims,
**characterized in that**
vehicle surroundings (1.1) of the vehicle (1) are detected in the first emergency mode (210), the vehicle surroundings (1.1) being taken into account when predetermining (103) the restriction (212.1) and/or when evaluating (105) the driving behavior (213).

7. Method (100) according to any of the preceding claims,
**characterized in that**
in addition to outputting (106) the driver notification (220), a vehicle response (107) is performed to restrict the driving behavior (213) on the basis of the predetermined restriction (212.1) of the driver notification (220), the vehicle surroundings (1.1) and/or the evaluation (105) of the driving behavior (213).

8. Computer program product comprising instructions which, when executed by a control unit (11), cause the control unit (11) to perform a method (100) according to any of the preceding claims.

9. Vehicle (1) having
a vehicle system (10) for performing a driving function in a normal mode, which vehicle system can, on the basis of a first fault (200) of the vehicle system (10), be operated in a first emergency mode (210) for at least partially maintaining the driving function, and
a control unit (11) for performing a method (100) according to any of claims 1 to 7.

## Revendications

1. Procédé (100) permettant de faire fonctionner un véhicule (1) qui présente un système de véhicule (10) pour l'exécution d'une fonction de conduite dans un mode de fonctionnement normal, lequel système de véhicule peut fonctionner en fonction d'une première défaillance (200) du système de véhicule (10) dans un premier mode de fonctionnement d'urgence (210) pour le maintien au moins partiel de la fonction de conduite, **caractérisé en ce que**
le procédé (100) comprend :
- la détection (101) d'une occurrence de la première défaillance (200) du système de véhicule (10),
- le déclenchement (102) du premier mode de fonctionnement d'urgence (210) en fonction de la première défaillance (200),
- la prédétermination (103) d'une restriction (212.1) d'au moins un paramètre de conduite (212) du véhicule (1) pour une seconde défaillance (201) du système de véhicule (10) suivant la première défaillance (200),
- l'émission (106) d'au moins une indication de conducteur (220) pendant le premier mode de fonctionnement d'urgence (210) en fonction de la restriction (212.1),
- la détection (104) d'un comportement de conduite (213) du conducteur pendant le premier mode de fonctionnement d'urgence (210),
- l'évaluation (105) du comportement de conduite (213) en fonction de la restriction (212.1),
dans lequel l'émission (106) de l'indication de conducteur (220) est exécutée en fonction de l'évaluation (105) du comportement de conduite (213).

2. Procédé (100) selon la revendication 1,
**caractérisé en ce que**
la détection (104) du comportement de conduite (213) est effectuée sur une période d'attente (104.1) avant que l'évaluation (105) du comportement de conduite (213) et l'émission (106) de l'indication de conducteur (220) ne soient exécutées.

3. Procédé (100) selon l'une des revendications précédentes,
**caractérisé en ce que**
l'émission (106) de l'indication de conducteur (220) est effectuée de manière haptique par l'exécution d'une commande (220.1) du composant de véhicule (12) pour l'exécution d'une vibration.

4. Procédé (100) selon l'une des revendications précédentes,
**caractérisé en ce que**
l'émission (106) de l'indication de conducteur (220) est effectuée sous la forme d'une émission (106) d'informations optiques et/ou acoustiques (220.2).

5. Procédé (100) selon l'une des revendications précédentes,
**caractérisé en ce que**
plusieurs indications de conducteur (220) sont émises en fonction de l'évaluation (105) du comportement de conduite (213) avec différents types d'émission successivement et/ou avec un intervalle de temps entre elles.

6. Procédé (100) selon l'une des revendications précédentes,
**caractérisé en ce qu'**
un environnement de véhicule (1.1) du véhicule (1) est détecté dans le premier mode de fonctionnement d'urgence (210), dans lequel l'environnement de véhicule (1.1) est pris en compte lors de la prédétermination (103) de la restriction (212.1) et/ou lors de l'évaluation (105) du comportement de conduite (213).

7. Procédé (100) selon l'une des revendications précédentes,
**caractérisé en ce que**,
en plus de l'émission (106) de l'indication de conducteur (220), une réaction de véhicule (107) est exécutée pour limiter le comportement de conduite (213) en fonction de la limitation (212.1) prédéterminée de l'indication de conducteur (220), de l'environnement de véhicule (1.1) et/ou de l'évaluation (105) du comportement de conduite (213).

8. Produit-programme informatique, comprenant des instructions qui, lorsqu'elles sont exécutées par une unité de commande (11), amènent l'unité de commande (11) à exécuter un procédé (100) selon l'une des revendications précédentes.

9. Véhicule (1) présentant
un système de véhicule (10) pour l'exécution d'une fonction de conduite dans un mode de fonctionnement normal, lequel système de véhicule peut fonctionner en fonction d'une première défaillance (200) du système de véhicule (10) dans un premier mode de fonctionnement d'urgence (210) pour le maintien au moins partiel de la fonction de conduite, et
une unité de commande (11) pour l'exécution d'un procédé (100) selon l'une des revendications 1 à 7.
